# DEMANDE DE BREVET EUROPEEN

(11) **EP 0 851 218 A1**
(43) Date de publication de la demande: **01.07.1998**
(21) Numéro de dépôt: 97420238.4
(22) Date de dépôt: 23.12.1997
(51) Int. Cl.: G01G 19/02

(54) **Elément de contruction d'un pont-bascule, systéme modulaire de tels éléments combinables et pont-bascule en faisant application**

(30) Priorité: 27.12.1996 FR 9616350
(71) Demandeur: Société Anonyme: Precia, 07001 Privas Cedex (FR)
(72) Inventeur: Sautaz, Jean-Louis, 07210 Allissas (FR); Baconnier, Gérard, 07000 Privas (FR)
(74) Mandataire: Ropital-Bonvarlet, Claude

(57) **Abrégé**

- Pesage.
- L' élément comprend :
   - une structure porteuse à base de longerons métalliques profilés, parallèles et de raidisseurs transversaux délimitant ensemble un châssis rigide,
   - une structure (**9**) d'armature de renforcement liée au châssis,
   - un enrobage (**11**) en béton ou analogue entourant les longerons et les raidisseurs et formant avec l'armature une plate-forme (**13**) de support et de roulement,
   - au moins une trappe s'ouvrant dans la plate-forme et livrant accès à un puits ouvert (**14**) contenant au moins en partie un organe de pesage (**18**),
   - et au moins un organe de liaison amovible (**26**) prévu sur au moins l'un des côtés transversaux pour permettre l'adaptation bout à bout avec au moins un autre élément de construction complémentaire.
- Application aux ponts-bascules.

## Description

La présente invention est relative au domaine de la construction de ponts-bascules, c'est-à-dire de plate-formes mobiles relativement par rapport à un bâti ou un massif de support et destinées à recevoir des structures, de préférence généralement roulantes, d'encombrement relativement important, afin de permettre d'en mesurer la masse.

La technique antérieure a fourni un grand nombre de propositions pour réaliser de tels ponts-bascules.

Pour fixer les idées, il peut être cité la réalisation d'une structure porteuse unitaire monobloc à partir de longerons métalliques et d'entretoises qui définissent des cadres dont certains, et plus généralement la plupart, sont comblés avec un remplissage à base de béton pour former une plate-forme de longueur utile égale à celle recherchée et offrant une bonne résistance aux contraintes mécaniques. Un tel mode de réalisation donne satisfaction mais pose des problèmes bien connus. Il s'agit du temps important d'installation sur site où, en règle générale, toute la construction intervient. Il s'agit encore du temps d'attente et d'utilisation pratique qui est conditionné par la durée de séchage optimale du béton avoisinant, comme cela est connu, une vingtaine de jours. Il s'agit encore de l'importance des travaux de génie civil devant être exécutés, ainsi qu'aux difficultés d'entretien pour combattre la corrosion des parties métalliques.

Il peut être cité également une autre technique consistant à mettre en oeuvre des panneaux monobloc en béton destinés à former la plate-forme. Une telle technique possède les inconvénients de l'encombrement, du transport sur route de tels panneaux monobloc et de la difficulté d'installation sur site.
La technique antérieure a aussi proposé de réaliser des ponts-bascules en faisant intervenir une charpente métallique pourvue d'un revêtement à base de tôle constituant la plate-forme proprement dite.

Une telle technique est avantageuse en raison de l'allégement de la masse totale de la structure, mais souffre d'inconvénients de réalisation, de résistance et, plus particulièrement encore, d'entretiens systématiques fréquents pour combattre les risques de corrosion des éléments métalliques.

La technique antérieure a aussi proposé de réaliser un pont bascule à partir d'une plate-forme constituée d'un caisson ouvert sur le dessus, nervuré longitudinalement et rempli de béton pour former la plate-forme de support et de roulement.

On conçoit qu'une telle proposition n'est pas de nature à simplifier l'exécution sur site et qu'elle possède les inconvénients inhérents à la grande masse de béton utilisée qui doit faire intervenir un temps de séchage optimal important pour disposer de la résistance mécanique suffisante.

L'objet de l'invention est de remédier aux inconvénients connus de la technique antérieure en proposant une nouvelle forme de pont-bascule susceptible d'être réalisé de façon rapide en étant constitué à base d'éléments de construction combinables et à caractère modulaire qui présentent l'avantage de permettre un transport unitaire sur les remorques routières en respectant les règles de gabarit et de charge par essieu, telles qu'elles sont actuellement édictées.

Un autre objet de l'invention est de proposer une technique de construction d'un pont-bascule qui permette de réaliser en usine des éléments préfabriqués qui sont, en outre, pourvus des organes sensibles responsables de la pesée. De cette manière, les organes sensibles peuvent être implantés dans des conditions rigoureuses de précision favorables à la justesse, à la fidélité, à la sensibilité et à la précision, toutes choses égales par ailleurs en raison de l'application et du domaine d'utilisation visés.

Pour atteindre les objectifs ci-dessus, l'invention préconise, tout d'abord, un élément de construction d'un pont-bascule caractérisé en ce qu'il comprend :
- une structure porteuse à base de longerons métalliques profilés, parallèles et de raidisseurs transversaux délimitant ensemble un châssis rigide définissant une surface plane, dite par convenance de dessus,
- une structure d'armature de renforcement liée au châssis parallèlement à la surface plane,
- un enrobage en béton ou analogue entourant les longerons et les raidisseurs et formant avec l'armature une plate-forme de support et de roulement,
- au moins une trappe s'ouvrant dans la plate-forme et livrant accès à un puits ouvert contenant au moins en partie un organe de pesage destiné à être lié à un bâti ou massif de support de l'élément de construction,
- et au moins un organe de liaison amovible prévu sur au moins l'un des côtés transversaux pour permettre l'adaptation bout à bout avec au moins un autre élément de construction complémentaire avec lequel ledit élément contribue à former un pont-bascule.

L'invention a également pour objet un système modulaire d'éléments de construction du type du précédent, présentant la particularité d'être combinables, un tel système se caractérisant en ce qu'il se compose :
- d'une première série de trois éléments dits de bout, présentant une même largeur mais chacun une longueur différente comprise entre 4 et 6 m,
- d'une seconde série de trois éléments dits centraux, présentant une même largeur mais chacun une longueur différente comprise entre 4 et 6 m.

Enfin, l'invention a encore pour objet un pont-bascule en tant qu'unité fonctionnelle, constitué à partir d'éléments de construction choisis à partir du système modulaire et se caractérisant en ce qu'il comprend :
- un bâti ou massif de support,
- et au moins un élément central lié au massif par les semelles de ses quatre organes de pesage.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue en plan d'un élément de construction conforme à l'invention.

La **fig. 2** est une coupe longitudinale prise selon la ligne II-II de la **fig. 1**.

Les **fig. 2a** et **2b** sont des coupes partielles montrant, à plus grande échelle, des détails de réalisation de l'élément.

La **fig. 2c** est une vue en plan partielle montrant, à plus grande échelle, les mêmes détails de réalisation que les **fig. 2a et 2b**.

Les **fig. 3** et **4** sont des coupes transversales prises respectivement selon les lignes III-III et IV-IV de la **fig. 1**.

La **fig. 5** est une coupe longitudinale analogue à la **fig. 2** mais illustrant une variante de réalisation.

La **fig. 6** est une demie vue transversale demi-coupe prise selon la ligne brisée VI-VI de la **fig. 1**.

La **fig. 7** est une vue en plan analogue à la **fig. 1** mais illustrant un autre élément de construction.

La **fig. 8** est une demie vue transversale demi-coupe prise selon la ligne brisée VIII-VIII de la **fig. 7**.

Les **fig. 9** et **10** sont des vues en plan mettant en évidence certaines caractéristiques du système modulaire conforme à l'invention.

La **fig. 11** est une vue en plan partiel d'un pont-bascule selon l'invention.

La **fig. 12** est une coupe-élévation prise selon la ligne XII-XII de la **fig. 11**.

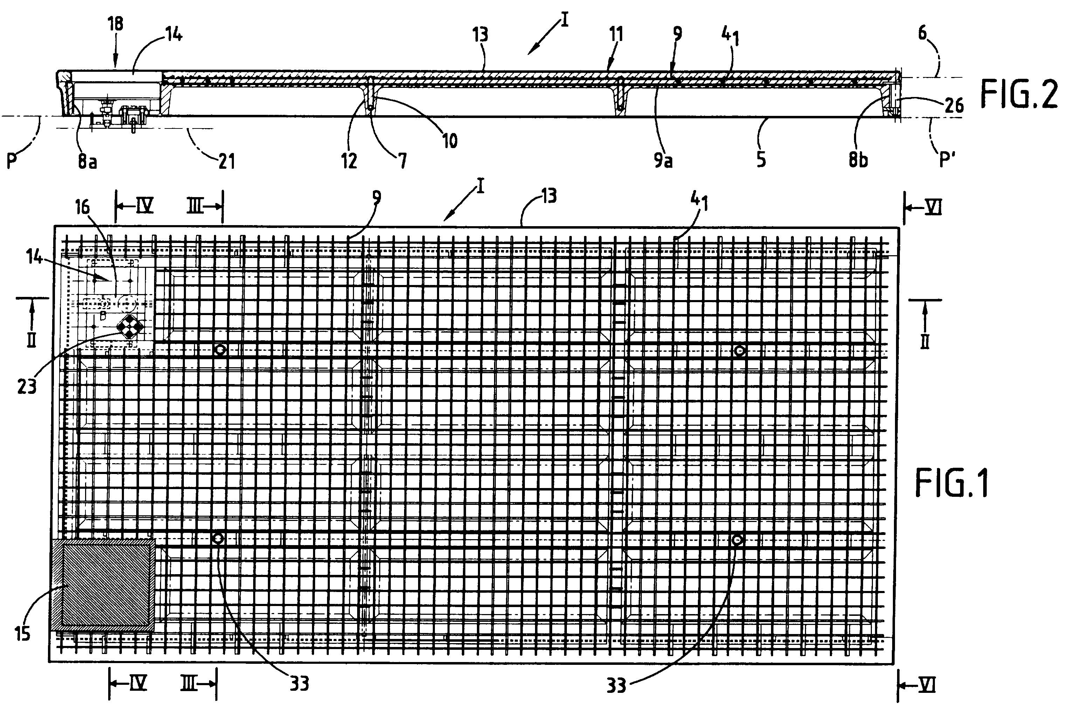

Les **fig. 1** à **4** montrent un élément **I** de construction d'un pont-bascule qui, selon l'invention, fait intervenir une structure porteuse réalisée à base de longerons métalliques **1**, avantageusement constitués par des profilés qui sont disposés parallèlement entre-eux et au sens de la longueur de l'élément, de manière à être orientés, en outre, pour que leur âme **2** s'étende verticalement par rapport à un plan de référence, tel que **P-P'**.

Les longerons métalliques sont, de préférence, du type en I et comportent, en conséquence, de part et d'autre de l'âme **2**, deux ailes **3** et **4** qui sont disposées pour être alignées pour l'ensemble des profilés, de manière à définir en quelque sorte, une surface dite basse **5** et une surface dite haute **6**. Par convenance, la surface basse **5** peut aussi être appelée surface inférieure et la surface haute **6**, surface supérieure ou de dessus. Dans tous les cas, ces surfaces de référence sont planes.

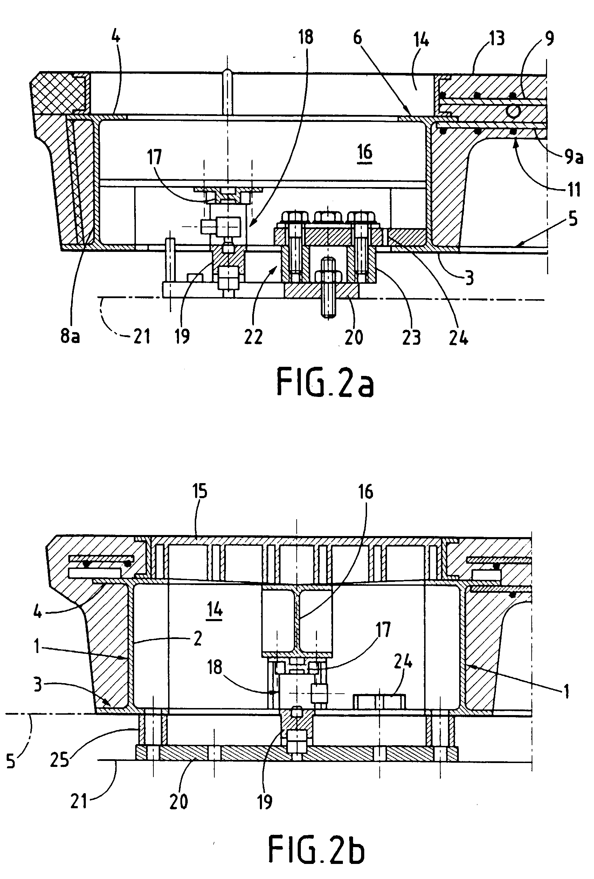

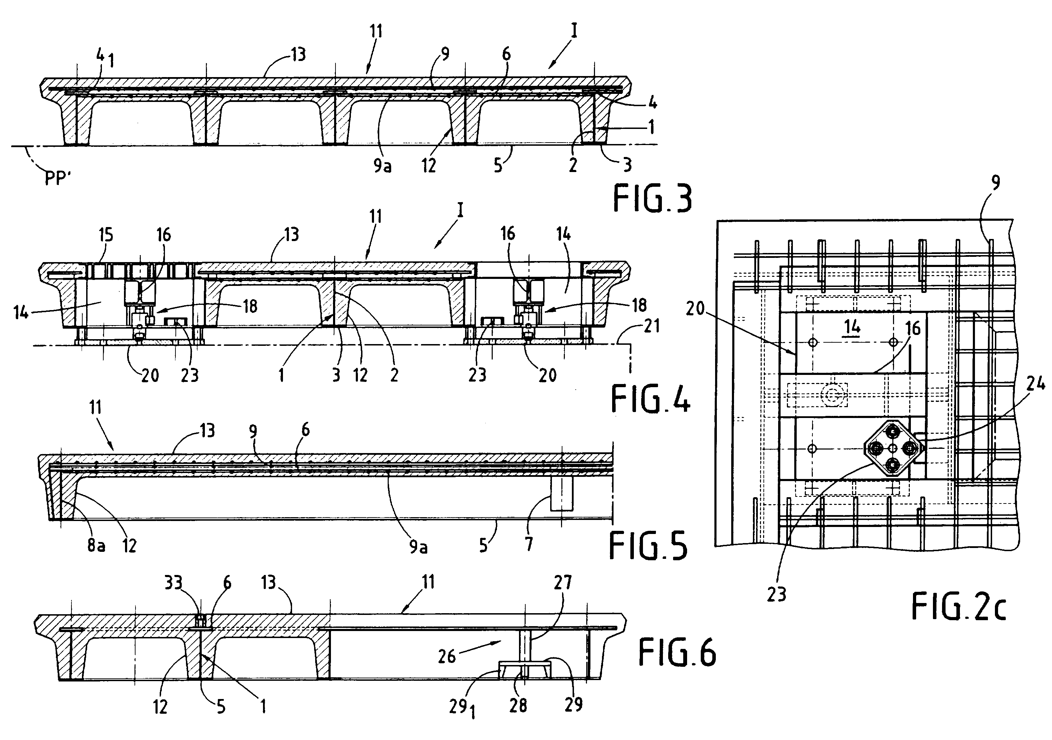

La structure porteuse est complétée par l'existence de raidisseurs transversaux **7** qui, dans l'exemple de réalisation selon la **fig. 2**, sont constitués par des barres rigides soudées sur les âmes **2** des longerons. Les raidisseurs transversaux **7** sont, par contre, pour ceux correspondant aux côtés transversaux de la structure, de préférence, formés par deux profilés extrêmes **8a** et **8b** du même type que les longerons **1**.

La structure porteuse, qui forme en quelque sorte un châssis ou une charpente, est complétée par une structure d'armature de renforcement, désignée dans son ensemble par la référence **9**. Cette structure d'armature est, par exemple, constituée par au moins un et, de préférence, deux treillis soudés **9a** et **9b** qui sont placés en relation avec la surface de dessus **6** pour des raisons qui apparaissent dans ce qui suit. Les treillis **9a** et **9b**, qui couvrent toute la surface plane de dessus **6**, sont liés à la structure porteuse par tous moyens appropriés, tels que soudure par points ou encore par l'intermédiaire d'épingles **10** les liant notamment aux barres transversales **7**. Dans cet exemple, la structure **9** est alors du type en double nappe.

L'élément de construction comprend, en outre, un enrobage **11** en béton ou analogue, qui est formé par moulage, de manière à entourer les longerons **1**, ainsi que les raidisseurs **7** et **8** pour former avec eux des poutres **12**. Dans une forme de réalisation pratique, toutes les faces des profilés sont enrobées dans le béton, hormis celles extérieures des ailes définissant la surface **5**. Il doit, bien sûr, être considéré, au sens de l'invention, que le moule pourrait être constitué pour que même ces surfaces soient enrobées.

L'enrobage **11** est réalisé également de manière à envelopper la structure d'armature **9**, de façon à constituer avec cette dernière, une plate-forme **13** de support et de roulement avec laquelle les poutres **12** font partie intégrante. Il peut d'ailleurs être prévu de rapporter, sur les ailes **4** des profilés **I**, des barreaux **4**_{**1**} qui assument une fonction d'immobilisation et de retenue du béton dans lequel ils sont enrobés.

Pour des raisons qui ressortent de ce qui suit et comme cela apparaît à la **fig. 2**, l'enrobage **11** est réalisé pour entourer complètement l'un des profilés transversaux, tel que **8a**, mais, par contre, pour laisser à nue la surface extérieure du second, tel que **8b**.

La **fig. 5** montre, à titre de variante de réalisation, la possible existence en tant que raidisseurs transversaux, de caissons **7**, de préférence aussi entourés par l'enrobage **11**.

Dans la forme de réalisation à partir de la **fig. 1**, l'élément **I** est réalisé pour présenter en retrait de l'un des côtés transversaux et, plus particulièrement, de celui correspondant au raidisseur **8a**, deux puits **14** qui sont chacun traversants et obturables dans le plan de la plate-forme **13** par l'intermédiaire d'une trappe **15** amovible. Comme cela est illustré par la **fig. 1**, la trappe **15** s'étend jusqu'au bord transversal de l'enrobage constitutif de la plate-forme **13** pour former une garniture résistante destinée à reprendre les contraintes mécaniques de roulage intervenant lors de la mise en service du pont-bascule.

Les **fig. 2a, 2b** et **2c** montrent que chaque puits **14** est pourvu d'un faux longeron **16** sous lequel est fixée l'une des parties **17** d'un organe de pesage **18** de type connu par l'homme de métier. La seconde partie **19** de l'organe **18** est liée à une semelle **20** qui s'étend en dessous de la surface **5**, de manière à permettre une adaptation sur un bâti ou un massif, tel que **21**. La semelle **20** est pourvue d'un organe **22** limiteur d'amplitude de déplacement dans le plan **P-P'**. Un tel limiteur est, par exemple constitué par une butée **23**, de préférence déformable élastiquement, s'élevant à partir de la semelle **20** pour coopérer en permanence avec un vé **24** présenté par un gousset solidaire de la structure porteuse.

De préférence aussi, chaque organe de pesage **18** est associé, dans un état de non utilisation, de stockage ou de mise hors service de l'élément **I**, à des bagues **25** interposées entre la semelle **20** et la structure porteuse pour neutraliser le degré de liberté existant entre les parties **17** et **19** de l'organe **18**.

Selon une autre disposition de l'invention, l'élément **I** est également pourvu, à partir de la face extérieure du raidisseur transversal **8b** opposée aux puits **14**, de deux organes **26** de liaison amovible dont la fonction apparaîtra dans ce qui suit. Chaque organe de liaison amovible **26** comprend une broche **27** s'étendant selon une direction générale perpendiculaire au plan **P-P'**. Comme cela apparaît à la **fig. 6**, chaque broche comprend, au niveau de sa partie terminale **28** proche de la surface **5**, un étrier **29** du type à emboîtement conique par l'intermédiaire de bords en dépouille **29**_{**1**}.

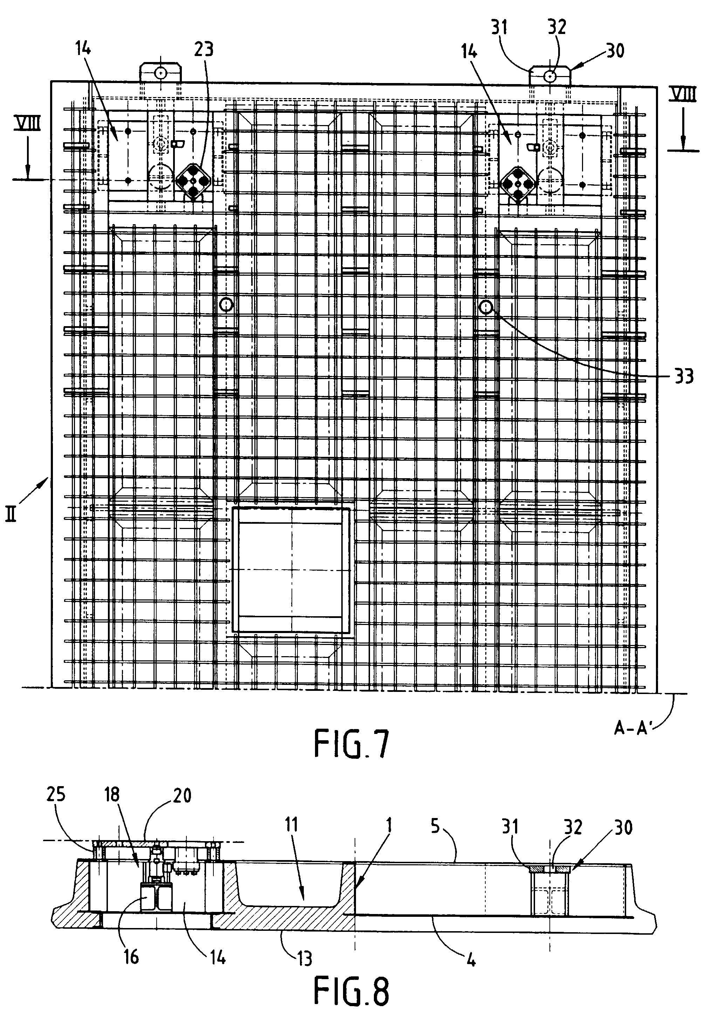

La **fig. 7** montre un autre exemple de réalisation d'un élément de construction désigné par la référence générale **II** et dont une demie partie seulement est représentée à gauche sur la figure par rapport à un axe de symétrie transversal **A-A'**. L'élément de construction **II** fait intervenir les éléments constitutifs tels que décrits précédemment pour ce qui concerne la structure porteuse et la structure d'armature **9**, ainsi que l'enrobage **11**. Toutefois, un tel élément **II** se caractérise par l'existence de deux puits **14** en retrait de chacun des profilés transversaux **8a** et **8b**. Chaque puits **14** est pourvu des mêmes éléments constitutifs que ceux décrits précédemment.

Selon une autre caractéristique constructive de cet élément **II**, chacun des profilés transversaux **8a** et **8b** est pourvu de deux organes de liaison amovible **30** qui sont complémentaires aux organes **26** et possèdent une implantation exactement correspondante, faisant intervenir une même implantation individuelle et un même écartement relatif. Chaque organe **30** comprend une patte **31** s'étendant parallèlement au plan **P-P'** en étant solidaire de la structure porteuse. Chaque patte **31** présente un trou **32** de diamètre compatible avec la réception de la partie terminale **28**, s'étend vers l'extérieur selon une direction parallèle aux longerons et présente une largeur qui est compatible avec celle interne des étriers d'emboîtement **29**.

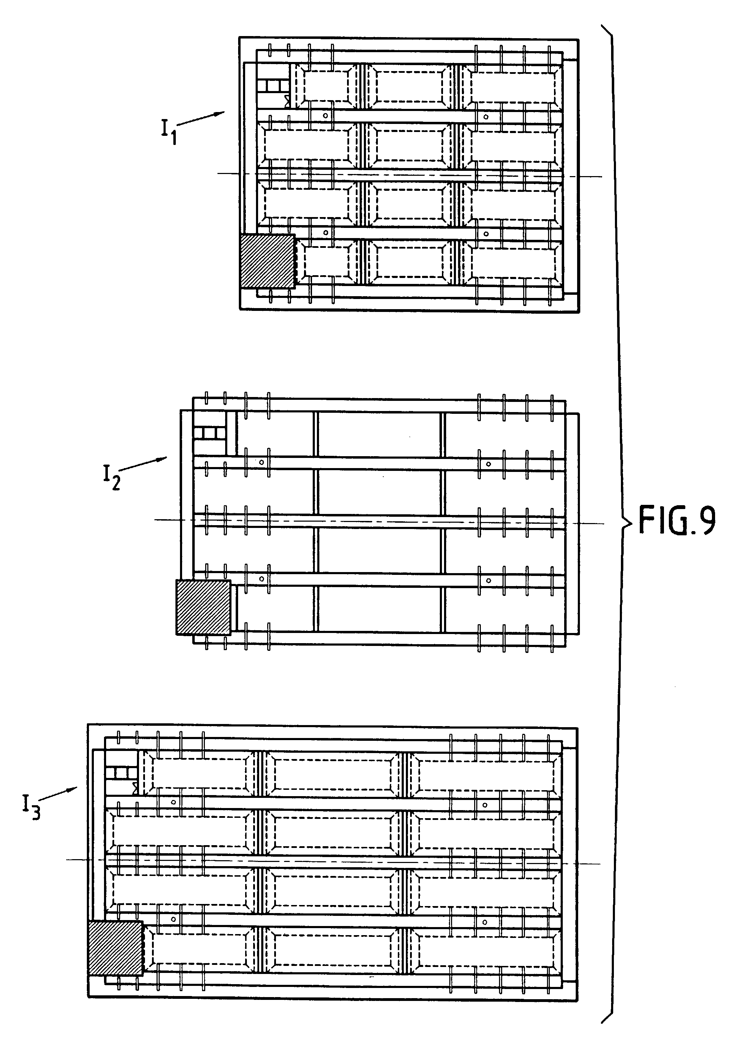

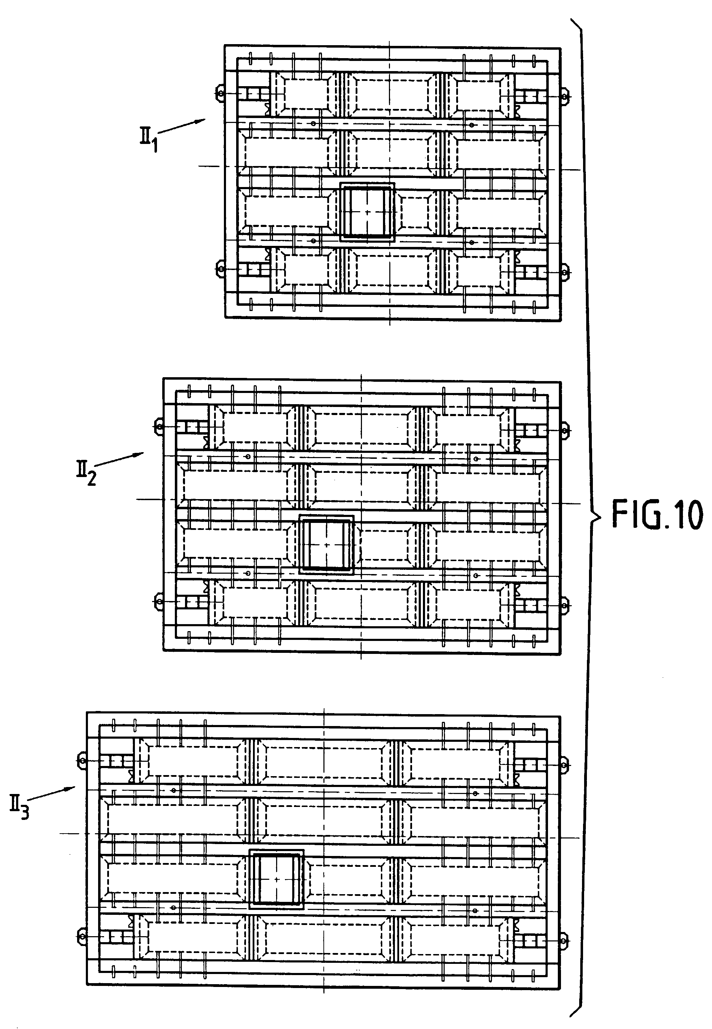

Selon une autre disposition de l'invention, les éléments de construction **I** et **II** sont prévus spécifiquement pour former un système modulaire de combinaisons qui est illustré par les **fig. 9** et **10**. La **fig. 9** est relative à une première série d'éléments **I**_{**1**}**, I**_{**2**}**, I**_{**3**} qui présentent la caractéristique de posséder une même largeur. Par contre, les éléments **I**_{**1**}**, I**_{**2**} et **I**_{**3**} se caractérisent par une longueur différente qui est choisie au sens de l'invention, pour être comprise entre 4 et 6 m. De préférence, chaque élément possède une largeur de 3 m et pour les éléments **I**_{**1**}**, I**_{**2**} et **I**_{**3**}, respectivement une longueur de 4, 5 et 6 m.

La **fig. 10** fait apparaître l'existence dans le système modulaire d'une seconde série constituée par trois éléments **II**_{**1**}**, II**_{**2**} et **II**_{**3**}. Ces éléments **II** possèdent également une même structure générale, une même largeur, de préférence, égale à celle des éléments de la première série et une longueur modulaire également comprise entre 4 et 6 m, par exemple, respectivement égale à 4, 5 et 6 m.

Le système modulaire ainsi retenu est choisi pour rendre possible, par toutes les combinaisons envisageables, la construction d'un pont-bascule dont la longueur correspond exactement à celle souhaitée. C'est ainsi qu'à partir du système à base des six éléments préfabriqués différents, il est possible de répondre à une exigence de vingt et un ponts-bascules de longueurs comprises entre 4 et 24 m, alors que par la technique antérieure, il serait nécessaire de construire vingt et un types spécifiques ayant à chaque fois leur coût propre.

Le système d'éléments préfabriqués et combinables offre encore un autre avantage sur la technique antérieure. En effet, un pont-bascule de longueur utile égale à 15 mètres peut être construit sur site sur lequel deux éléments **I**_{**3**} et un élément **II**_{**3**} peuvent être simultanément amenés en étant transportés par voie routière à partir d'une seule remorque tractée. Il en résulte une réduction non négligeable du coût de transport.

En outre, la préfabrication en usine permet de fournir des éléments **I** et **II** entièrement équipés qu'il suffit d'adapter sur un massif ou un bâti préalablement réalisé sur le site d'exploitation.

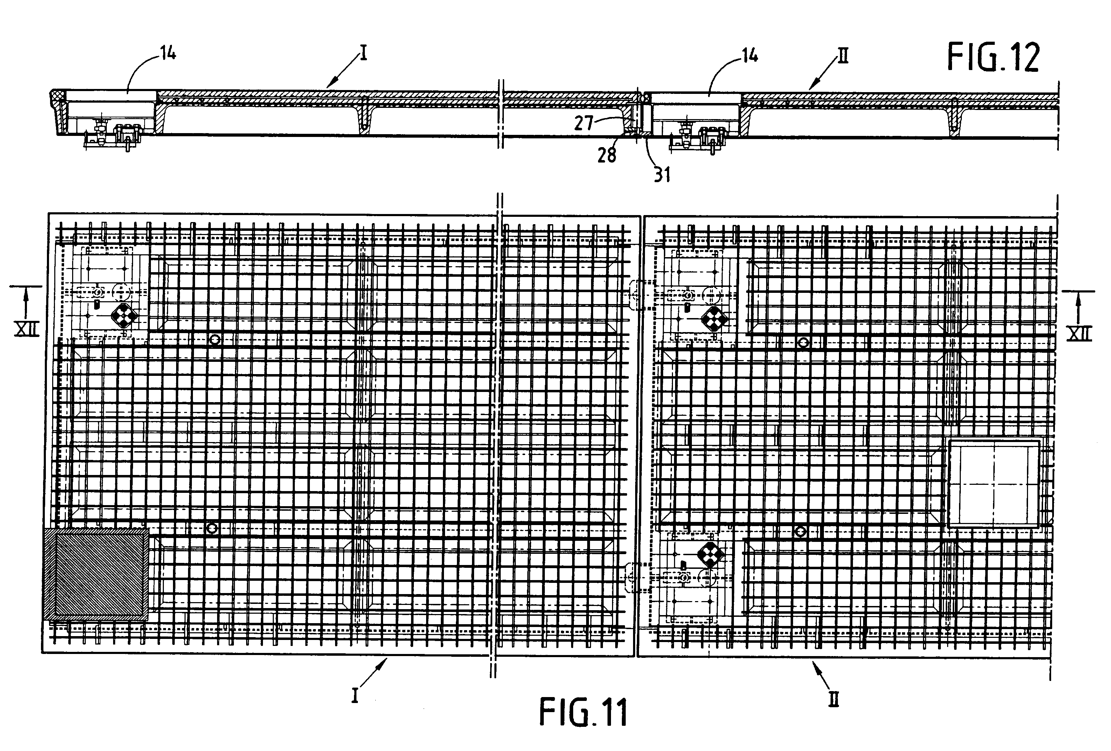

Les **fig. 11** et **12** montrent partiellement de quelle manière un pont bascule peut être implanté et adapté à partir du système modulaire selon les **fig. 9** et **10**.

En effet, en prenant en compte la pré-existence d'un massif ou d'un bâti **21** de réception, la première étape de construction consiste à placer un élément **II** de longueur appropriée dans la partie centrale du pont-bascule à construire. Pour cette raison, l'élément **II** est qualifié d'élément central. Cette opération de manutention est facilitée par la présence d'organes de fixation **33**, amovibles ou non, accessibles à partir de la surface extérieure de la plate-forme **13** pour permettre l'adaptation temporaire de moyens d'élingage.

Un tel élément **II** est placé de manière que ses longerons s'étendent parallèlement à la portée générale devant être conférée au pont-bascule. L'implantation de l'élément **II** est assurée en établissant la liaison ferme des semelles **20** des quatre organes de pesage sur le massif ou le bâti **21**. Une telle liaison peut intervenir facilement après la pose de l'élément **II**, étant donné qu'il suffit de percer le massif **21** par un accès direct à travers chacun des puits **14** et les semelles correspondantes pour qu'une fixation démontable, ferme et résistante puisse être réalisée.

Dans une seconde étape, deux éléments **I**, également choisis à partir de la série selon la **fig. 9** pour leur longueur appropriée, sont disposés de part et d'autre de l'élément **II**, de telle manière que les organes de liaison **26** de chacun d'eux soient engagés par les parties terminales **28** dans les trous **32** et par les étriers d'emboîtement **29** sur les pattes **31**. Cette adaptation est facilitée par la présence, comme pour les éléments **II**, d'organes de fixation **33**.

Cette adaptation établit un liaison structurelle conférant aux trois éléments un caractère unitaire tel que la plate-forme qu'ils définissent s'apparente à celle monobloc des ponts-bascules traditionnels. Ce caractère unitaire est dû à la combinaison des moyens de liaison faisant coopérer les parties terminales **28** avec les trous **32** et les étriers d'emboîtement **29** avec les pattes **31** au moyen des bords en dépouilles **29**_{**1**}. Il en résulte une liaison sans jeu dans le plan **P-P'**.

Après cette adaptation, les éléments **I**, dits de bout, sont liés au massif ou au bâti **21** par les semelles **20**, comme dit précédemment, après quoi, les bagues **25** sont ôtées pour libérer le degré de liberté des organes de pesage **18**, afin de restituer au pont-bascule la fonctionnalité pour laquelle il est prévu.

L'invention n'est pas limitée aux exemples décrits et représentés, car diverses modifications peuvent y être apportées sans sortir de son cadre.

## Revendications

1. Elément de construction d'un pont-bascule, caractérisé en ce qu'il comprend :
- une structure porteuse à base de longerons métalliques (**1**) profilés, parallèles et de raidisseurs transversaux (**7, 8**) délimitant ensemble un châssis rigide définissant une surface plane (**6**), dite par convenance de dessus,
- une structure (**9**) d'armature de renforcement liée au châssis parallèlement à la surface plane,
- un enrobage (**11**) en béton ou analogue entourant les longerons et les raidisseurs et formant avec l'armature une plate-forme (**13**) de support et de roulement,
- au moins une trappe (**15**) s'ouvrant dans la plate-forme et livrant accès à un puits ouvert (**14**) contenant au moins en partie un organe de pesage (**18**) destiné à être lié à un bâti ou massif (**21**) de support de l'élément de construction,
- et au moins un organe de liaison amovible (**26, 30**) prévu sur au moins l'un des côtés transversaux pour permettre l'adaptation bout à bout avec au moins un autre élément de construction complémentaire avec lequel ledit élément contribue à former un pont-bascule.

2. Elément selon la revendication 1, caractérisé en ce que les longerons sont constitués par des profilés en I disposés pour être orientés par leur âme (**2**) perpendiculairement à la surface plane (**6**) qu'ils contribuent à matérialiser par l'une de leurs ailes.

3. Elément selon la revendication 1 ou 2, caractérisé en ce que les longerons sont réunis entre-eux par des raidisseurs transversaux caissonnés (**7**).

4. Elément selon la revendication 1 ou 2, caractérisé en ce que les longerons sont réunis entre-eux par des barres (**7**) soudées sur les longerons et liées à la structure d'armature par des épingles (**10**).

5. Elément selon la revendication 1, caractérisé en ce que la structure d'armature (**9**) est formée par au moins un treillis plan (**9a**) couvrant toute l'âme de la surface plane.

6. Elément selon la revendication 1, caractérisé en ce que le puits (**14**) est traversé par un faux longeron (**16**) sous lequel est fixée l'une des parties constitutives (**17**) d'un organe de pesage (**18**) dont l'autre partie (**19**) est solidaire d'une semelle (**20**) s'étendant au-delà d'une surface inférieure (**5**) de l'élément pour permettre la fixation sur le bâti ou sur le massif (**21**).

7. Elément selon la revendication 1 ou 6, caractérisé en ce que chaque puits (**14**) est pourvu d'au moins un limiteur (**24**) d'amplitude de déplacement dans un plan parallèle à la plate-forme, ledit limiteur coopérant avec au moins une butée (**23**) déformable élastiquement et portée par la semelle.

8. Elément selon la revendication 1, caractérisé en ce que chaque organe de liaison (**26**) est constitué par une broche rigide (**27**) d'orientation générale perpendiculaire au plan de référence (**P-P'**) de la plate-forme et associée, en retrait de son extrémité (**28**) située à l'opposé de ladite plate-forme, à un étrier (**29**) d'emboîtement d'une patte trouée (**31**) appartenant à un élément de construction complémentaire (**II**).

9. Elément selon la revendication 1, caractérisé en ce que chaque organe de liaison (**30**) est constitué par une patte trouée (**31**) s'étendant parallèlement au plan de la plate-forme, à partir d'un côté transversal de l'élément et apte à être, d'une part, traversée par une broche complémentaire (**27, 28**) d'un autre élément de construction (**I**) et, d'autre part, emboîtée par un étrier (**29**) associé à ladite broche.

10. Elément selon l'une des revendications 8 ou 9, caractérisé en ce que l'étrier (**29**) comporte deux bords en dépouille (**29**_{**1**}) pour l'emboîtement transversal de la patte (**31**).

11. Elément selon la revendication 1, caractérisé en ce que la trappe (**15**) obture le puits et s'étend jusqu'au bord transversal correspondant pour constituer pour ce dernier une garniture de protection et de reprise des contraintes de roulement.

12. Elément selon la revendication 6, caractérisé en ce que la semelle de chaque organe de pesage est liée, dans un état hors service de l'élément, à la structure porteuse de ce dernier par des bagues (**25**) ou cales de butées neutralisant tout déplacement relatif entre les deux parties constitutives de l'organe de pesage (**18**).

13. Elément selon la revendication 1, caractérisé en ce que la plate-forme comporte, à partir de sa surface supérieure, des organes (**33**) de fixation amovible de moyens d'élingage.

14. Système modulaire d'éléments de construction combinables selon l'une des revendications 1 à 13, caractérisé en ce qu'il se compose :
- d'une première série de trois éléments (**I**_{**1**}**, I**_{**2**}**, I**_{**3**}) dits de bout, présentant une même largeur mais chacun une longueur différente comprise entre 4 et 6 m,
- d'une seconde série de trois éléments (**II**_{**1**}**, II**_{**2**}**, II**_{**3**}) dits centraux, présentant une même largeur mais chacun une longueur différente comprise entre 4 et 6 m.

15. Système selon la revendication 14, caractérisé en ce que les éléments (**I**) de la première série sont pourvus sur un côté transversal, opposé à celui bordant deux puits (**14**), de deux organes de liaison (**26**) à broche et à étrier présentant entre-eux un même écartement que celui des plaques trouées (**31**), des éléments (**II**) de la seconde série.

16. Système selon la revendication 14, caractérisé en ce que les éléments (**II**) de la seconde série sont pourvus, sur chacun des deux côtés transversaux, de deux organes (**30**) de liaison à patte trouée (**31**) présentant entre-eux un même écartement que celui entre les broches des éléments de la première série.

17. Système selon la revendication 16, caractérisé en ce que les éléments de la seconde série comprennent chacun, en bordure de chacun des deux côtés transversaux pourvus des pattes trouées, deux puits abritant deux organes de pesage.

18. Pont-bascule constitué à partir d'éléments de construction choisis à partir du système modulaire selon l'une des revendications 14 à 17, caractérisé en ce qu'il comprend :
- un bâti ou massif de support (**21**),
- et au moins un élément central (**II**) lié au massif par les semelles (**20**) de ses quatre organes de pesage (**18**).

19. Pont-bascule selon la revendication 18, caractérisé en ce qu'il comprend en outre, au moins un élément (**I**) de bout disposé à la suite de l'élément central, adapté en bout de ce dernier par accouplement des organes de liaison complémentaire et lié au massif par les semelles des deux organes de pesage qu'il comporte.
